(19) **Europäisches Patentamt / European Patent Office / Office européen des brevets**

(11) **EP 4 550 439 A1**

(12) **EUROPEAN PATENT APPLICATION**
published in accordance with Art. 153(4) EPC

(43) Date of publication:
**07.05.2025 Bulletin 2025/19**

(21) Application number: **23830371.3**

(22) Date of filing: **28.06.2023**

(51) International Patent Classification (IPC):
**H01M 4/13** $^{(2010.01)}$

(52) Cooperative Patent Classification (CPC):
**Y02E 60/10**

(86) International application number:
**PCT/CN2023/103481**

(87) International publication number:
**WO 2024/002200 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.06.2022 CN 202210752174**

(71) Applicant: **BYD Company Limited
Shenzhen, Guangdong 518118 (CN)**

(72) Inventors:
• **SUN, Huajun
  Shenzhen, Guangdong 518118 (CN)**

• **YUAN, Xiaotao
  Shenzhen, Guangdong 518118 (CN)**
• **HE, Kefeng
  Shenzhen, Guangdong 518118 (CN)**
• **XU, Zhan
  Shenzhen, Guangdong 518118 (CN)**
• **GE, Liping
  Shenzhen, Guangdong 518118 (CN)**

(74) Representative: **Mathys & Squire
The Shard
32 London Bridge Street
London SE1 9SG (GB)**

(54) **SECONDARY BATTERY ELECTRODE PLATE AND PREPARATION METHOD THEREFOR, AND SECONDARY BATTERY**

(57)     A secondary battery electrode plate and a preparation method therefor, and a secondary battery. The secondary battery electrode plate comprises a current collector and a first active material layer, wherein the first active material layer is located on a surface of the current collector and contains first active substance particles, and the first active substance particles have an equivalent sphericity $X_1$ as represented by formula $X_1 = 3/(S_1 R_1 \rho_1)$, where $0.05 \leq X_1 \leq 0.8$; $R_1$ is the median radius of the first active substance particles in the unit of $\mu m$; $S_1$ is the specific surface area of the first active substance particles in the unit of $m^2/g$; and $\rho_1$ is the true density of the first active substance particles in the unit of $g/cm^3$.

EP 4 550 439 A1

## Description

### CROSS-REFERENCE TO RELATED APPLICATIONS

The present disclosure claims priority to Chinese Patent Application No. CN202210752174.8, filed on June 29, 2022. The entire content of the above-referenced application is incorporated herein by reference.

### FIELD

The present disclosure relates to the field of lithium ion pool, and specifically, to a secondary battery electrode plate and a preparation method therefor, and a secondary battery.

### BACKGROUND

The increase of the thickness of an electrode can improve the energy density of a battery core and reduce costs of the battery core. However, with the increase of the thickness, diffusion paths of lithium ions in the electrode become longer, the liquid phase diffusion impedance of the electrode is increased, and electrode reaction kinetics are reduced. In a related art, to improve the kinetic performance of a thick electrode, electrode compaction is often reduced, or the content of a conductive agent in the electrode is increased. The former reduces the energy density of the electrode, and the later often reduces the capacity per gram of a mixture of the electrode and further increases the costs.

To ensure both the energy density and the kinetic performance of the electrode, an important research direction is to reduce the tortuosity of an active material layer inside the electrode. There are many methods for reducing the tortuosity of the electrode, for example, increasing porosity, constructing a vertical pore structure of the electrode, and changing material particle morphology. However, the foregoing methods in the related art still cannot achieve an excellent effect of reducing the tortuosity of the active material layer inside the electrode.

### SUMMARY

An objective of the present disclosure is to provide a secondary battery electrode plate and a preparation method therefor, and a secondary battery. The compaction of an electrode of the secondary battery electrode plate is ensured, and the electrode has a high capacity retention rate and liquid phase diffusion impedance of the electrode is reduced.

To achieve the foregoing objective, a first aspect of the present disclosure provides a secondary battery electrode plate. The secondary battery electrode plate includes a current collector and a first active material layer. The first active material layer is located on a surface of the current collector. The first active material layer contains first active substance particles. The first active substance particles have an equivalent sphericity $X_1$ as represented by the following Formula (1):

$$X_1 = 3/(S_1 R_1 \rho_1) \ \text{Formula (1)},$$

where $0.05 \leq X_1 \leq 0.8$, $R_1$ is a median radius of the first active substance particles in a unit of $\mu$m; $S_1$ is a specific surface area of the first active substance particles in a unit of $m^2$/g; and $\rho_1$ is true density of the first active substance particles in a unit of g/cm$^3$.

Optionally, when the electrode plate is a positive electrode plate, $0.10 \leq X_1 \leq 0.8$; or when the electrode plate is a negative electrode plate, $0.05 \leq X_1 \leq 0.8$.

Optionally, the secondary battery electrode plate further includes a second active material layer; the second active material layer is located on a surface, deviating from the surface of the current collector, of the first active material layer; the second active material layer contains second active substance particles; the second active substance particles have an equivalent sphericity $X_2$ as represented by the following Formula (2):

$$X_2 = 3/(S_2 R_2 \rho_2) \ \text{Formula (2)},$$

where $R_2$ is a median radius of the second active substance particles in the unit of $\mu$m; $S_2$ is a specific surface area of the second active substance particles in the unit of $m^2$/g; $P_2$ is true density of the second active substance particles in the unit of g/cm$^3$; and the sphericity $X_2$ of the second active substance particles is greater than the equivalent sphericity $X_1$ of the first active substance particles.

Optionally, $0.05 \leq X_1 \leq 0.4$; and $0.2 \leq X_2 \leq 0.8$.

Optionally, $0.1 \leq X_1 \leq 0.3$; and $0.2 \leq X_2 \leq 0.5$.

Optionally, $0.07 \leq X_2 - X_1 \leq 0.5$.

Optionally, $0.2 \leq X_2 - X_1 \leq 0.4$.

Optionally, when the electrode plate is a positive electrode plate, $R_1$ and $R_2$ of the first active substance particles are respectively and independently any values ranging from 0.05 to 5, and $S_1$ and $S_2$ are respectively and independently any values ranging from 0.5 to 20.

When the electrode plate is a negative electrode plate, $R_1$ and $R_2$ of the first active substance particles are respectively and independently any values ranging from 1 to 20, and $S_1$ and $S_2$ are respectively and independently any values ranging from 0.5 to 5.

Optionally, surface density of the first active material layer is $Y_1 = \varepsilon \times L$, and surface density of the second active material layer is $Y_2 = (1-\varepsilon) \times L$,

where L is total surface density of the first active material layer and the second active material layer in the unit of $g/m^2$, one side of the current collector is coated with the first active material layer, or each of two sides of the current collector is coated with the first active material layer, and the surface, deviating from the current collector, of each first active material layer is coated with the second active material layer.

If one side of the current collector is coated with the first active material layer, when the electrode plate is the positive electrode plate, $50 \leq L \leq 300$, or when the electrode plate is the negative electrode plate, $23 \leq L \leq 138$.

If each of the two sides of the current collector is coated with the first active material layer, when the electrode plate is the negative electrode plate, $100 \leq L \leq 600$, or when the electrode plate is the negative electrode plate, $46 \leq L \leq 276$; and $\varepsilon$ is an adjustment parameter, and $0.2 \leq \varepsilon \leq 0.8$.

Optionally, $0.1 \leq (X_2/Y_2)/(X_1/Y_1) \leq 6$.

Optionally, $0.25 \leq (X_2/Y_2)/(X_1/Y_1) \leq 4.5$.

Optionally, when the electrode plate is the positive electrode plate, compacted density is 2.0 to 2.7 $g/cm^3$; or when the electrode plate is the negative electrode plate, compacted density is 1.0 to 2.0 $g/cm^3$.

A second aspect of the present disclosure provides a method for preparing a secondary battery electrode plate. The method includes the following steps:

S1, coating a current collector with first slurry to obtain an electrode plate with the current collector coated with a first slurry layer; and

S2, rolling the electrode plate.

The first slurry contains first active substance particles, and the first active substance particles have an equivalent sphericity $X_1$ as represented by the following Formula (1):

$$X_1 = 3/(S_1 R_1 \rho_1) \ \text{Formula (1)},$$

where $0.05 \leq X_1 \leq 0.8$, $R_1$ is a median radius of the first active substance particles in a unit of $\mu m$; $S_1$ is a specific surface area of the first active substance particles in a unit of $m^2/g$; and $\rho_1$ is true density of the first active substance particles in a unit of $g/cm^3$.

Optionally, when the electrode plate is a positive electrode plate, $0.10 \leq X_1 \leq 0.8$; or when the electrode plate is a negative electrode plate, $0.05 \leq X_1 \leq 0.8$.

Optionally, step $S_1$ includes: coating the current collector with the first slurry and second slurry to obtain an electrode plate sequentially coated with the first slurry layer and the second slurry layer in a direction far away from the current collector.

The second slurry contains second active substance particles, and the second active substance particles have an equivalent sphericity $X_2$ as represented by the following Formula (2):

$$X_2 = 3/(S_2 R_2 \rho_2) \ \text{Formula (2)},$$

where $R_2$ is a median radius of the second active substance particles in the unit of $\mu m$; $S_2$ is a specific surface area of the second active substance particles in the unit of $m^2/g$; $\rho_2$ is true density of the second active substance particles in the unit of $g/cm^3$; and the sphericity $X_2$ of the second active substance particles is greater than the equivalent sphericity $X_1$ of the first active substance particles.

A third aspect of the present disclosure provides a secondary battery. The secondary battery includes the secondary battery electrode plate according to the first aspect of the present disclosure.

In the above technical solution, the first active material layer of the secondary battery electrode plate in the present disclosure uses active substance particles with specific sphericity, which can reduce the liquid phase impedance of the electrode and improve the capacity retention rate while ensuring that the electrode has high compacted density.

Other features and advantages of the present disclosure will be described in detail in the following detailed description.

## DETAILED DESCRIPTION

Specific embodiments of the present disclosure are described in detail below. It is to be noted that the specific embodiments described herein are merely used to describe and explain the present disclosure, but are not intended to limit the present disclosure.

A first aspect of the present disclosure provides a secondary battery electrode plate. The secondary battery electrode plate includes a current collector and a first active material layer. The first active material layer is located on a surface of the current collector. The first active material layer contains first active substance particles. The first active substance particles have an equivalent sphericity $X_1$ as represented by the following Formula (1):

$$X_1 = 3/(S_1 R_1 \rho_1) \ \text{Formula (1)},$$

where $0.05 \leq X_1 \leq 0.8$, $R_1$ is the median radius of the first active substance particles in the unit of $\mu m$; $S_1$ is the specific surface area of the first active substance particles in the unit of $m^2/g$; and $\rho_1$ is the true density of the first active substance particles in the unit of $g/cm^3$.

In the present disclosure, the median radius of the active substance particles is 1/2 of a quantity distribution median particle size D50 of the active substance particles. D50 refers to an average particle size (diameter) of the active substance particles in the unit of $\mu m$. The foregoing particle size D50 is a corresponding diameter when a cumulative quantity percentage of the active substance particles reaches 50%. The specific surface area S of the active substance particles may be detected by a nitrogen adsorption desorption test.

According to the present disclosure, when electrode active substance particles in an electrode plate are randomly selected to determine the particle size D50 of the electrode active substance particles, a test method specifically includes the following steps: a) a battery that is completely discharged is disassembled to obtain the electrode plate, and then any position in a dressing area is cut through argon ions to obtain an electrode plate cross section sample; b) the foregoing electrode plate cross section sample is placed in a Scanning Electron Microscope (SEM) for observing, and a voltage and a magnification of the SEM are adjusted according to actual requirements to ensure that enough particles in the foregoing sample can be seen clearly and shot to obtain an SEM picture; c) the obtained SEM picture may be imported into gray scale debugging software (for example, Geodict) to count the particle sizes of the particles, or the particle sizes of the particles may alternatively be identified and counted by directly using artificial naked eyes; and d) 20 to 30 experiments are performed cumulatively, the quantity of the particles counted in each experiment is less than 500pcs, and the particle size D50 of the electrode active substance particles in an electrode plate is obtained after the foregoing results are counted.

The active substance particles in the active material layer of a lithium ion battery in the present disclosure have a specific equivalent sphericity as represented by a formula $X_1 = 3/(S_1 R_1 \rho_1)$, where $0.05 \leq X_1 \leq 0.8$, so that the lithium ion battery in the present disclosure is beneficial to improving the capacity retention rate and the liquid phase diffusion impedance of the electrode based on good compacted density.

In a specific embodiment of the present disclosure, when the electrode plate is a positive electrode plate, $0.10 \leq X_1 \leq 0.8$.

In a specific embodiment of the present disclosure, when the electrode plate is a negative electrode plate, $0.05 \leq X_1 \leq 0.8$.

In a specific embodiment of the present disclosure, the secondary battery electrode plate further includes a second active material layer. The second active material layer is located on a surface, deviating from the surface of the current collector, of the first active material layer. The second active material layer contains second active substance particles. The second active substance particles have an equivalent sphericity $X_2$ as represented by the following Formula (2):

$$X_2 = 3/(S_2 R_2 \rho_2) \ \text{Formula (2)},$$

where $R_2$ is the median radius of the second active substance particles in the unit of $\mu m$; $S_2$ is the specific surface area of the second active substance particles in the unit of $m^2/g$; $\rho_2$ is the true density of the second active substance particles in the unit of $g/cm^3$; and the sphericity $X_2$ of the second active substance particles is greater than the equivalent sphericity $X_1$ of the first active substance particles.

The secondary battery electrode plate of the present disclosure has double active material layers with different particle sphericities. The equivalent sphericity of the first active substance particles close to a nearby current collector is much smaller than the equivalent sphericity of the second active substance particles far away from the current collector. The higher the equivalent sphericity of the active material particles, the higher the isotropy degree among the particles, the smaller the total surface area of the particles under the same volume, the shorter the paths that lithium ions flow in the electrode, the lower the overall tortuosity of the electrode, and the lower the resistance to diffusion of the lithium ions. The active substance particles with high sphericity in the second active material layer are used, so that the isotropy degree of surface particles can be increased, and physical rebound and expansion during cycling of the electrode can be reduced. The equivalent sphericity of the active substance particles of the first active material layer is low, so that particle accumulation can have relatively high compaction and the energy density of the electrode can be improved. According to the present disclosure, the active substance materials with different sphericity are matched, so that diffusion paths of the lithium ions can be optimized, the tortuosity of the electrode can be effectively reduced while ensuring the compaction of the electrode, the capacity retention rate of the electrode is further improved, and the liquid phase diffusion impedance of the electrode is reduced.

In a specific embodiment of the present disclosure, $0.05 \leq X_1 \leq 0.4$, preferably, $0.1 \leq X_1 \leq 0.3$. Within this range, the first active material layer of the secondary battery electrode plate may be ensured to have relatively low sphericity and relatively high compacted density, so that the electrode has a higher capacity retention rate and lower liquid phase diffusion impedance, thereby further optimizing electrochemical performance of the electrode.

In a specific embodiment of the present disclosure, $0.2 \leq X_2 \leq 0.8$, preferably, $0.2 \leq X_2 \leq 0.5$. Within this range, the second active material layer of the secondary battery electrode plate may be ensured to have relatively low sphericity and relatively high lithium ion diffusion capacity.

In a specific embodiment of the present disclosure, $0.07 \leq X_2 - X_1 \leq 0.5$, preferably, $0.1 \leq X_2 - X_1 \leq 0.5$, preferably, $0.2 \leq X_2 - X_1 \leq 0.4$. When a difference between the equivalent sphericity $X_2$ of the second active substance particles and the equivalent sphericity $X_1$ of the first active substance particles, the matching of the particle sphericity of the two active material layers is further optimized, and the electrochemical performance of the secondary battery electrode plate can be further improved.

In a specific embodiment of the present disclosure, the surface density of the first active material layer is $Y_1 = \varepsilon \times L$, and the surface density of the second active material layer is $Y_2 = (1-\varepsilon) \times L$, where L is a total surface density of the first active material layer and the second active material layer in the unit of $g/m^2$, one side of the current collector is coated with the first active material layer, or each of two sides of the current collector is coated with the first active material layer, and the surface, deviating from the current collector, of each first active material layer is coated with the second active material layer. If one side of the current collector is coated with the first active material layer, when the electrode plate is a positive electrode plate, $50 \leq L \leq 300$, and when the electrode plate is a negative electrode plate, $23 \leq L \leq 138$; if each of the two sides of the current collector is coated with the first active material layer, when the electrode plate is a negative electrode plate, $100 \leq L \leq 600$, and when the electrode plate is a negative electrode plate, $46 \leq L \leq 276$; and $\varepsilon$ is an adjustment parameter, $0.2 \leq \varepsilon \leq 0.8$. It is appropriate when the thickness of the secondary battery electrode plate is within the foregoing range, the capacity retention rate of the electrode can be further improved, and the liquid phase diffusion impedance of the electrode can be reduced.

According to the present disclosure, a relationship between the surface density of the active material layers of the secondary battery electrode plate and the equivalent sphericity of the active material particles affects the electrochemical performance of the electrode. In a specific embodiment of the present disclosure, $0.1 \leq (X_2/Y_2)/(X_1/Y_1) \leq 6$, preferably, $0.25 \leq (X_2/Y_2)/(X_1/Y_1) \leq 4.5$, more preferably, $3 \leq (X_2/Y_2)/(X_1/Y_1) \leq 4.5$. The higher the proportion of the surface density of the active material layer with high sphericity, the lower the overall tortuosity of the electrode, meanwhile, the lower the compaction capacity of the electrode, and the lower the liquid phase diffusion impedance of the electrode. The lower the proportion of the surface density of the active material layer with high sphericity, the higher the tortuosity of the electrode, the higher the compaction capacity, and the higher the liquid phase diffusion impedance of the electrode. When a relationship between parameters of the secondary battery electrode plate is within the foregoing range, consideration may be given to both the liquid phase diffusion and energy density of the secondary battery electrode plate, so that the energy density and the liquid phase diffusion impedance of the electrode can be maintained within an appropriate range.

In a specific embodiment of the present disclosure, when the electrode plate is a positive electrode plate, $R_1$ and $R_2$ of the first active substance particles are respectively and independently any values ranging from 0.05 to 5.0, and $S_1$ and $S_2$ are respectively and independently any values ranging from 0.5 to 20. When the electrode plate is a negative electrode plate, $R_1$ and $R_2$ of the first active substance particles are respectively and independently any values ranging from 1 to 20, and $S_1$ and $S_2$ are respectively and independently any values ranging from 0.5 to 5. $\rho_1$ and $\rho_2$ are respectively the true density of the first active substance particles and the second active substance particles, for example, the true density of lithium cobalt oxide is 5.1 g/cm$^3$; the true density of a ternary material is 4.8 g/cm$^3$; the true density of lithium manganate is 4.2 g/cm$^3$; the true density of lithium iron phosphate is 3.6 g/cm$^3$; and the true density of graphite is 2.26 g/cm$^3$.

In a specific embodiment of the present disclosure, when the electrode plate is a positive electrode plate, the total surface density of the first active material layer and the second active material layer is 50 to 300 g/m$^2$ and the compacted density is 2.0 to 2.7 g/m3. When the electrode plate is a negative electrode plate, the total surface density of the first active material layer and the second active material layer is 23 to 138 g/m$^2$ and the compacted density is 1.0 to 2.0 g/m3. The total surface density refers to the total density of the first active material layer and the second active material layer on a single side of the current collector, and is obtained by cutting an electrode plate with a specific surface density and weighing. In the present disclosure, the total surface density is measured by a method for weighing the weight of a certain area of electrode plate except for the current collector, the compacted density is obtained by measuring the thickness of the electrode plate after rolling and the surface density of the electrode plate, compacted density=surface density/(thickness of electrode plate after rolling minus thickness of current collector).

In a specific embodiment of the present disclosure, based on the total weight of the first active material layer, the content of the first active substance particles is 90% to 99% by weight, preferably, 94% to 97% by weight. Based on the total weight of the second active material layer, the content of the second active substance particles is 90% to 99% by weight, preferably, 94% to 97% by weight.

In a specific embodiment of the present disclosure, the secondary battery electrode plate is a positive electrode, the first active substance particles and the second active substance particles may use various active materials for positive electrodes known to those skilled in the art, for example, the first active substance particles and the second active substance particles may be respectively and independently selected from one or more of $LiFePO_4$, $Li_3V_2(PO_4)_3$, $LiMn_2O_4$, $LiMnO_2$, $LiNiO_2$, $LiCoO_2$, $LiVPO_4F$, and $LiFeO_2$. The first active material layer and the second active material layer further respectively and independently contain a conductive agent and a bonding agent. The conductive agent and the bonding agent may alternatively be known to those skilled in the art, preferably, the conductive agent may be selected from one or more of carbon nanotubes, carbon black, graphite, graphene, and carbon nanofibers; and the bonding agent may be selected from one or more of polyvinylidene fluoride, polytetrafluoroethylene, butadiene styrene rubber, and polyacrylate.

In another specific embodiment of the present disclosure, the secondary battery electrode plate is a negative electrode, the first active substance particles and the second active substance particles may use various active materials for positive electrodes known to those skilled in the art, for example, the first active substance particles and the second active substance particles may be respectively independently selected from one or more of graphite, petroleum coke, organic cracked carbon, intermediate phase carbon microspheres, carbon fibers, tin alloys, and silicon alloys.

A second aspect of the present disclosure provides a method for preparing a secondary battery electrode plate. The method includes the following steps. In S1, a current collector is coated with first slurry to obtain an electrode plate with the current collector coated with a first slurry layer; and S2, the electrode plate is rolled.

The first slurry contains first active substance particles. The first active substance particles have an equivalent sphericity $X_1$ as represented by the following Formula (1), $X_1 = 3/(S_1 R_1 \rho_1)$ Formula (1), where $0.05 \leq X_1 \leq 0.8$, $R_1$ is the median radius of the first active substance particles in the unit of $\mu m$; $S_1$ is the specific surface area of the first active substance particles in the unit of m$^2$/g; and $\rho_1$ is the true density of the first active substance particles in the unit of g/cm$^3$. The method in the present disclosure can prepare the secondary battery electrode plate with a high capacity retention rate of the electrode and low liquid phase diffusion impedance of the electrode.

In a specific embodiment of the present disclosure, when the electrode plate is a positive electrode plate, $0.10 \leq X_1 \leq 0.8$.

In a specific embodiment of the present disclosure, when the electrode plate is a negative electrode plate, $0.05 \leq X_1 \leq 0.8$.

In a specific embodiment of the present disclosure, step S1 includes the following steps. The current collector is coated with the first slurry and second slurry to obtain an electrode plate sequentially coated with the first slurry layer and the second slurry layer in a direction far away from the current collector. The second slurry contains second active substance particles, and the second active substance particles have an equivalent sphericity $X_2$ as represented by the following Formula (2): $X_2 = 3/(S_2 R_2 \rho_2)$ Formula (2), where $R_2$ is the median radius of the second active substance particles in the unit of $\mu m$; $S_2$ is the specific surface area of the second active substance particles in the unit of m$^2$/g; $\rho_2$ is the true density of the second active substance particles in the unit of g/cm$^3$; and the sphericity $X_2$ of the second active substance particles is greater than the equivalent sphericity $X_1$ of the first active substance particles.

A method for coating the current collector with the first slurry and the second slurry is not specifically limited in the present disclosure. In a specific embodiment of the present disclosure, in Step S1, the current collector may be coated with the first slurry and the second slurry through a double-layer coating die head. In a specific embodiment of the present disclosure, in Step S1, the current collector is coated with the first slurry to obtain an electrode plate coated with a first slurry layer, and then the coating the first slurry layer with the second slurry.

In a specific embodiment of the present disclosure, in Step S1, the viscosity of the first slurry at 20°C and 50s$^{-1}$ is

2000 to 3000 mPa·s, and the viscosity of the second slurry at 20°C and 50s$^{-1}$ is 2000 to 3000 mPa·s. The surface density of the first slurry layer is 50 to 150 g/m$^2$, and the surface density of the second slurry layer is 50 to 150 g/m$^2$.

According to the present disclosure, rolling is a conventional method for preparing an electrode by those skilled in the art. Rolling is performed according to a target compacted density of the electrode, for example, may be one-time rolling, multiple rolling, cold rolling, and hot rolling.

According to the present disclosure, the first slurry and the second slurry further contains a solvent. The solvent contained in the first slurry and the second slurry in the present disclosure is not specifically limited in the present disclosure, for example, may be, but is not limited to, water, N-methylpyrrolidone (NMP), and ethyl alcohol.

In a specific embodiment of the present disclosure, the content of the first active substance particles in the first slurry is 40% to 70% by weight, preferably, 50% to 70% by weight. The content of the second active substance particles in the second slurry is 30% to 70% by weight, preferably, 50% to 70% by weight.

In a specific embodiment of the present disclosure, a positive electrode is prepared by the method in the present disclosure. In step S1, the first active substance particles and the second active substance particles may use various active materials for positive electrodes known to those skilled in the art, for example, the first active substance particles and the second active substance particles may be respectively and independently selected from one or more of $LiFePO_4$, $Li_3V_2(PO_4)_3$, $LiMn_2O_4$, $LiMnO_2$, $LiNiO_2$, $LiCoO_2$, $LiVPO_4F$, and $LiFeO_2$. The first active material layer and the second active material layer further respectively and independently contain a conductive agent and a bonding agent. The conductive agent and the bonding agent may alternatively be known to those skilled in the art, preferably, the conductive agent may be selected from one or more of carbon nanotubes, carbon black, graphite, graphene, and carbon nanofibers; and the bonding agent may be selected from one or more of polyvinylidene fluoride, polytetrafluoroethylene, butadiene styrene rubber, and polyacrylate. In a specific embodiment of the present disclosure, the first slurry and the second slurry further respectively and independently contain a conductive agent and a bonding agent, preferably, the conductive agent may be known to those skilled in the art, for example, the conductive agent may be selected from one or more of carbon nanotubes, carbon black, graphite, graphene, and carbon nanofibers; and the bonding agent may be selected from one or more of polyvinylidene fluoride, polytetrafluoroethylene, butadiene styrene rubber, and polyacrylate.

In another specific embodiment of the present disclosure, a negative electrode is prepared by the present disclosure. In step S1, the first active substance particles and the second active substance particles may use various active materials for negative electrodes known to those skilled in the art, for example, the first active substance particles and the second active substance particles may be respectively independently selected from one or more of graphite, petroleum coke, organic cracked carbon, intermediate phase carbon microspheres, carbon fibers, tin alloys, and silicon alloys.

In a specific embodiment of the present disclosure, $0.05 \leq X_1 \leq 0.4$, more preferably, $0.1 \leq X_1 \leq 0.3$.

In a specific embodiment of the present disclosure, $0.2 \leq X_2 \leq 0.8$, more preferably, $0.2 \leq X_2 \leq 0.5$.

In a specific embodiment of the present disclosure, $0.07 \leq X_2 - X_1 \leq 0.5$, more preferably, $0.2 \leq X_2 - X_1 \leq 0.4$.

In a specific embodiment of the present disclosure, when the electrode plate is a positive electrode plate, $R_1$ and $R_2$ of the first active substance particles are respectively and independently any values ranging from 0.05 to 5, and $S_1$ and $S_2$ are respectively and independently any values ranging from 0.5 to 20; when the electrode plate is a negative electrode plate, $R_1$ and $R_2$ of the first active substance particles are respectively and independently any values ranging from 1 to 20, and $S_1$ and $S_2$ are respectively and independently any values ranging from 0.5 to 5; $\rho_1$ and $\rho_2$ are respectively the true density of the first active substance particles and the second active substance particles, for example, the true density of lithium cobalt oxide is 5.1 g/cm$^3$; the true density of a ternary material is 4.8 g/cm$^3$; the true density of lithium manganate is 4.2 g/cm$^3$; the true density of lithium iron phosphate is 3.6 g/cm$^3$; and the true density of graphite is 2.26 g/cm$^3$.

A third aspect of the present disclosure provides a secondary battery. The secondary battery includes the secondary battery electrode plate according to the first aspect of the present disclosure. The secondary battery of the present disclosure has a relatively high capacity retention rate and relatively low liquid phase diffusion impedance of the electrode.

The present disclosure is further described below through embodiments, but the present disclosure is not limited in any way accordingly.

Embodiment 1

S1, one side of a positive current collector was coated with first slurry and second slurry through a double-layer coating die head to obtain an electrode plate coated with a first slurry layer and a second slurry layer. The positive current collector was coated with the first slurry layer, and the first slurry layer was coated with the second slurry layer. Both the first slurry and the second slurry contained lithium iron phosphate, Polyvinylidene Fluoride (PVDF), carbon tubes, carbon black, and NMP. The content of the lithium iron phosphate in the first slurry layer was 60.1% by weight, the viscosity of the first slurry at 20°C and 50s$^{-1}$ was 2560 mPa·s, and the surface density of the first slurry layer was 125 g/m$^2$. The content of the lithium iron phosphate in the second slurry layer was 60.3% by weight, the viscosity of the second slurry at 20°C and 50s$^{-1}$ was 2600 mPa·s, and the surface density of the second slurry layer was 125 g/m$^2$; and the total surface density of the first slurry layer and the second slurry layer was 250 g/m$^2$.

S2, the electrode plate was dried and rolled, and the first slurry layer formed the first active material layer, and the second slurry layer formed the second active material layer to obtain a positive electrode of a lithium ion battery. The compacted density of the positive electrode of the lithium ion battery was 2.50 g/cm$^3$.

The median radius $R_1$ of the lithium iron phosphate in the first active material layer was 0.34 $\mu$m, the specific surface area $S_1$ was 15 m$^2$/g, the true density $\rho_1$ was 3.6 g/cm$^3$, and the equivalent sphericity $X_1$ was 0.163. The median radius $R_2$ of the lithium iron phosphate in the second active material layer was 0.34 $\mu$m, the specific surface area $S_2$ was 10 m$^2$/g, the true density $\rho_2$ was 3.6 g/cm$^3$, and the equivalent sphericity $X_2$ was 0.245. Summary of various parameters of the positive electrode of the lithium ion battery is shown in Table 1.

Embodiment 2

A positive electrode was prepared by a method that was the same as that in Embodiment 1. The only difference was that, in step S1, the median radius $R_2$ of the lithium iron phosphate in the second active material layer was 0.34 $\mu$m, the specific surface area $S_2$ was 7.2 m$^2$/g, the true density $\rho_2$ was 3.6 g/cm$^3$, and the equivalent sphericity $X_2$ was 0.34.

Embodiment 3

A positive electrode was prepared by a method that was the same as that in Embodiment 1. The only difference was that, in step S1, the median radius $R_2$ of the lithium iron phosphate in the second active material layer was 0.25 $\mu$m, the specific surface area $S_2$ was 6.6 m$^2$/g, the true density $\rho_2$ was 3.6 g/cm$^3$, and the equivalent sphericity $X_2$ was 0.505.

Embodiment 4

A positive electrode was prepared by a method that was the same as that in Embodiment 2. The only difference was that, in step S1, the median radius $R_1$ of the lithium iron phosphate in the first active material layer was 0.38 $\mu$m, the specific surface area $S_1$ was 25 m$^2$/g, the true density $\rho_1$ was 3.6 g/cm$^3$, and the equivalent sphericity $X_1$ was 0.088.

Embodiment 5

A positive electrode was prepared by a method that was the same as that in Embodiment 2. The only difference was that, in step S1, the median radius $R_1$ of the lithium iron phosphate in the first active material layer was 0.34 $\mu$m, the specific surface area $S_1$ was 12 m$^2$/g, the true density $\rho_1$ was 3.6 g/cm$^3$, and the equivalent sphericity $X_1$ was 0.204.

Embodiment 6

A positive electrode was prepared by a method that was the same as that in Embodiment 2. The only difference was that, in step S1, the surface density of the first active material layer was 145 g/m$^2$, and the surface density of the second active material layer was 105 g/m$^2$ .

Embodiment 7

A positive electrode was prepared by a method that was the same as that in Embodiment 2. The only difference was that, in step S1, the surface density of the first active material layer was 165 g/m$^2$, and the surface density of the second active material layer was 85 g/m$^2$.

Embodiment 8

A positive electrode was prepared by a method that was the same as that in Embodiment 3. The only difference was that, in step S1, the surface density of the first active material layer was 100 g/m$^2$, and the surface density of the second active material layer was 150 g/m$^2$.

Embodiment 9

A positive electrode was prepared by a method that was the same as that in Embodiment 3. The only difference was that, in step S1, the surface density of the first active material layer was 70 g/m$^2$, and the surface density of the second active material layer was 180 g/m$^2$ .

Embodiment 10

A positive electrode was prepared by a method that was the same as that in Embodiment 3. The difference was that, in step S1, the specific surface area $S_1$ of the lithium iron phosphate in the first active material layer was 9.5 $m^2$/g, the median radius $R_1$ was 0.22 $\mu$m, the true density was 3.6 g/$cm^3$, and the surface density of the first active material layer was 70 g/$m^2$. The specific surface area $S_2$ of the lithium iron phosphate in the second active material layer was 5.2 $m^2$/g, the median radius $R_2$ was 0.22 $\mu$m, the true density was 3.6 g/$cm^3$, and the surface density of the second active material layer was 180 g/$m^2$.

Embodiment 11

A positive electrode was prepared by a method that was the same as that in Embodiment 3. The difference was that, in step S1, the specific surface area $S_1$ of the lithium iron phosphate in the first active material layer was 12 $m^2$/g, the median radius $R_1$ was 0.34 $\mu$m, the true density was 3.6 g/$cm^3$, and the surface density of the first active material layer was 70 g/$m^2$. The specific surface area $S_2$ of the lithium iron phosphate in the second active material layer was 6.6 $m^2$/g, the median radius $R_2$ was 0.25 $\mu$m, the true density was 3.6 g/$cm^3$, and the surface density of the second active material layer was 180 g/$m^2$.

Embodiment 12

S1, one side of a negative current collector was coated with first slurry and second slurry through a double-layer coating die head to obtain an electrode plate coated with a first slurry layer and a second slurry layer. The negative current collector was coated with the first slurry layer, and the first slurry layer was coated with the second slurry layer. The surface density of the first slurry layer was 58 g/$m^2$, the surface density of the second slurry layer was 58 g/$m^2$, and the total surface density was 116 g/$m^2$.
S2, the electrode plate was dried and rolled to obtain a negative electrode of a lithium ion battery. The compacted density of the negative electrode of the lithium ion battery was 1.50 g/$cm^3$.
Both the first slurry and the second slurry contained graphite, SBR, CMC, carbon black, and water. The median radius $R_1$ of the graphite in the first active material layer was 3 $\mu$m, the specific surface area $S_1$ was 3 $m^2$/g, the true density $\rho_1$ was 2.1 g/$cm^3$, and the equivalent sphericity $X_1$ was 0.16. The viscosity of the first slurry at 20°C and 50$s^{-1}$ was 2560 mPa·s, and the content of the graphite in the first slurry was 45% by weight. The median radius $R_2$ of the graphite in the second active material layer was 3 $\mu$m, the specific surface area $S_2$ was 1.4 $m^2$/g, the true density $\rho_2$ was 2.1 g/$cm^3$, and the equivalent sphericity $X_2$ was 0.340. The viscosity of the second slurry at 20°C and 50$s^{-1}$ was 2660 mPa·s, and the content of the graphite in the second slurry was 45% by weight. Summary of various parameters of the negative electrode of the lithium ion battery is shown in Table 1.

Embodiment 13

S1, one side of a positive current collector was coated with first slurry and second slurry through a coating die head to obtain an electrode plate coated with a first slurry layer. The first slurry contained lithium iron phosphate, Polyvinylidene Fluoride (PVDF), carbon tubes, carbon black, and NMP. The content of the lithium iron phosphate in the first slurry layer was 60.1% by weight, the viscosity of the first slurry at 20°C and 50$s^{-1}$ was 2450 mPa·s, and the surface density of the first slurry layer was 250 g/$m^2$.
S2, the electrode plate was dried and rolled, and the first slurry layer formed the first active material layer to obtain a positive electrode of a lithium ion battery. The compacted density of the positive electrode of the lithium ion battery was 2.50 g/$cm^3$.
The median radius $R_1$ of the lithium iron phosphate in the first active material layer was 0.30 $\mu$m, the specific surface area $S_1$ was 8 $m^2$/g, the true density $\rho_1$ was 3.6 g/$cm^3$, and the equivalent sphericity $X_1$ was 0.347. Summary of various parameters of the positive electrode of the lithium ion battery is shown in Table 1.

Embodiment 14

S1, one side of a positive current collector was coated with first slurry through a coating die head to obtain an electrode plate coated with a first slurry layer. The first slurry contained lithium iron phosphate, Polyvinylidene Fluoride (PVDF), carbon tubes, carbon black, and NMP. The content of the lithium iron phosphate in the first slurry layer was 59.3% by weight, and the viscosity of the first slurry at 20°C and 50$s^{-1}$ was 2570 mPa·s. The surface density of the first slurry layer was 250 g/$m^2$.
S2, the electrode plate was dried and rolled, and the first slurry layer formed the first active material layer to obtain a positive electrode of a lithium ion battery. The compacted density of the positive electrode of the lithium ion battery was 2.50 g/cm$^3$.

The median radius $R_1$ of the lithium iron phosphate in the first active material layer was 0.2 $\mu$m, the specific surface area $S_1$ was 8 m$^2$/g, the true density $\rho_1$ was 3.6 g/cm$^3$, and the equivalent sphericity $X_1$ was 0.520. Summary of various parameters of the positive electrode of the lithium ion battery is shown in Table 1.

Embodiment 15

S1, one side of a positive current collector was coated with first slurry through a coating die head to obtain an electrode plate coated with a first slurry layer. The first slurry contained lithium iron phosphate, Polyvinylidene Fluoride (PVDF), carbon tubes, carbon black, and NMP. The content of the lithium iron phosphate in the first slurry layer was 58.9% by weight, and the viscosity of the first slurry at 20°C and 50s$^{-1}$ was 2670 mPa·s. The surface density of the first slurry layer was 250 g/m$^2$.

S2, the electrode plate was dried and rolled, and the first slurry layer formed the first active material layer to obtain a positive electrode of a lithium ion battery. The compacted density of the positive electrode of the lithium ion battery was 2.50 g/cm$^3$.

The median radius $R_1$ of the lithium iron phosphate in the first active material layer was 0.30 $\mu$m, the specific surface area $S_1$ was 18 m$^2$/g, the true density $\rho_1$ was 3.6 g/cm$^3$, and the equivalent sphericity $X_1$ was 0.154. Summary of various parameters of the positive electrode of the lithium ion battery is shown in Table 1.

Embodiment 16

S1, one side of a negative current collector was coated with first slurry through a coating die head to obtain an electrode plate coated with a first slurry layer. The first slurry contained graphite, SBR, CMC, carbon black, and water. The content of the graphite on the first slurry layer was 46.3% by weight, the surface density was 116 g/m$^2$, and compacted density was 1.60 g/cm$^3$.

S2, the electrode plate was dried and rolled to obtain a negative electrode of a lithium ion battery. The compacted density of the negative electrode of the lithium ion battery was 1.60 g/cm$^3$.

The median radius $R_1$ of the graphite in the first active material layer was 4.0 $\mu$m, the specific surface area $S_1$ was 1.0 m$^2$/g, the true density $\rho_1$ was 2.1 g/cm$^3$, and the equivalent sphericity $X_1$ was 0.357. The viscosity of the first slurry at 20°C and 50s$^{-1}$ was 2750 mPa·s. Summary of various parameters of the negative electrode of the lithium ion battery is shown in Table 1.

Embodiment 17

One side of a positive current collector was coated with first slurry in Embodiment 1, and an obtained electrode plate coated with a first slurry layer was rolled under a condition of the compacted density of 2.50 g/cm$^3$ to obtain a positive electrode of a lithium ion battery.

The first slurry contained lithium iron phosphate, Polyvinylidene Fluoride (PVDF), carbon tubes, carbon black, and NMP. The median radius R of the lithium iron phosphate was 0.34 $\mu$m, the specific surface area 5 was 15 m$^2$/g, the true density $\rho$ was 3.6 g/cm$^3$, and the equivalent sphericity $X_1$ was 0.163. The viscosity of the first slurry at 20°C and 50s$^{-1}$ was 2560 mPa·s, and the content of the lithium iron phosphate in the first slurry was 60.1% by weight. The total surface density of the positive electrode of the lithium ion battery was 250 g/m$^2$ .

Embodiment 18

One side of a positive current collector was coated with second slurry in Embodiment 1, and an obtained electrode plate coated with a second slurry layer was rolled under a condition of the compacted density of 2.50 g/cm$^3$ to obtain a positive electrode of a lithium ion battery.

The second slurry contained lithium iron phosphate, Polyvinylidene Fluoride (PVDF), carbon tubes, carbon black, and NMP. The median radius R of the lithium iron phosphate was 0.34 $\mu$m, the specific surface area S was 10 m$^2$/g, the true density $\rho$ was 3.6 g/cm$^3$, and the equivalent sphericity $X_2$ was 0.245. The viscosity of the second slurry at 20°C and 50s$^{-1}$ was 2600 mPa·s, and the content of the lithium iron phosphate in the second slurry was 60.3% by weight. The total surface density of the positive electrode of the lithium ion battery was 250 g/m$^2$.

Embodiment 19

One side of a positive current collector was coated with third slurry, and an obtained electrode plate coated with third slurry layer was dried and rolled to obtain a positive electrode of a lithium ion battery. The compacted density of the positive electrode of the lithium ion battery was 2.50 g/cm$^3$.

The surface density of the third slurry layer was 250 g/m$^2$, and the viscosity of the third slurry at 20°C and 50s$^{-1}$ was 2700 mPa·s. The third slurry contained two types of lithium iron phosphate, Polyvinylidene Fluoride (PVDF), carbon tubes, carbon black, and NMP. The first type of lithium iron phosphate was the same as the lithium iron phosphate in the first slurry in Embodiment 1. The second type of lithium iron phosphate was the same as the lithium iron phosphate in the second slurry in Embodiment 1. The content of the lithium iron phosphate in the third slurry was 60.2%.

Embodiment 20

A positive electrode was prepared by a method that was the same as that in Embodiment 1. The only difference was that, in step S1, one side of a positive current collector was coated with a second slurry layer, and the second slurry layer was coated with a first slurry layer.

Embodiment 21

A positive electrode was prepared by a method that was the same as that in Embodiment 13. The difference was that, in step S1, the median radius $R_1$ of the lithium iron phosphate in the first active material layer was 0.2 $\mu$m, the specific surface area $S_1$ was 5.3 m$^2$/g, the true density $\rho_1$ was 3.6 g/cm$^3$, and the equivalent sphericity $X_1$ was 0.786.

Comparative example 1

A positive electrode was prepared by a method that was the same as that in Embodiment 14. The difference was that, the median radius $R_1$ of the lithium iron phosphate in the first active material layer was 0.16 $\mu$m, the specific surface area $S_1$ was 6.1 m$^2$/g, the true density $\rho_1$ was 3.6 g/cm$^3$, and the equivalent sphericity $X_1$ was 0.853.

Comparative example 2

A positive electrode was prepared by a method that was the same as that in Embodiment 14. The difference was that, the median radius $R_1$ of the lithium iron phosphate in the first active material layer was 0.8 $\mu$m, the specific surface area $S_1$ was 22 m$^2$/g, the true density $\rho_1$ was 3.6 g/cm$^3$, and the equivalent sphericity $X_1$ was 0.047.

Comparative example 3

A negative electrode was prepared by a method that was the same as that in Embodiment 16. The difference was that, the median radius $R_1$ of the lithium iron phosphate in the first active material layer was 3.5 $\mu$m, the specific surface area $S_1$ was 0.5 m$^2$/g, the true density $\rho_1$ was 2.1 g/cm$^3$, and the equivalent sphericity $X_1$ was 0.816.

Comparative example 4

A negative electrode was prepared by a method that was the same as that in Embodiment 16. The difference was that, the median radius $R_1$ of the lithium iron phosphate in the first active material layer was 7 $\mu$m, the specific surface area $S_1$ was 4.2 m$^2$/g, the true density $\rho_1$ was 2.1 g/cm$^3$, and the equivalent sphericity $X_1$ was 0.0485.

Table 1

| | $X_1$ | $X_2$ | $Y_1$, g/m$^2$ | $Y_2$, g/m$^2$ | L, g/m$^2$ | $(X_2/Y_2)/(X_1/Y_1)$ | $X_2-X_1$ |
|---|---|---|---|---|---|---|---|
| Embodiment 1 | 0.163 | 0.245 | 125 | 125 | 250 | 1.50 | 0.082 |
| Embodiment 2 | 0.163 | 0.340 | 125 | 125 | 250 | 2.08 | 0.177 |
| Embodiment 3 | 0.163 | 0.505 | 125 | 125 | 250 | 3.09 | 0.342 |
| Embodiment 4 | 0.088 | 0.340 | 125 | 125 | 250 | 3.86 | 0.252 |
| Embodiment 5 | 0.204 | 0.340 | 125 | 125 | 250 | 1.67 | 0.136 |
| Embodiment 6 | 0.163 | 0.340 | 145 | 105 | 250 | 2.88 | 0.177 |
| Embodiment 7 | 0.163 | 0.340 | 165 | 85 | 250 | 4.04 | 0.177 |
| Embodiment 8 | 0.163 | 0.505 | 100 | 150 | 250 | 2.07 | 0.342 |

(continued)

|  | $X_1$ | $X_2$ | $Y_1$, g/m² | $Y_2$, g/m² | L, g/m² | $(X_2/Y_2)/(X_1/Y_1)$ | $X_2$-$X_1$ |
|---|---|---|---|---|---|---|---|
| Embodiment 9 | 0.163 | 0.505 | 70 | 180 | 250 | 1.20 | 0.342 |
| Embodiment 10 | 0.399 | 0.728 | 125 | 125 | 250 | 2.01 | 0.402 |
| Embodiment 11 | 0.204 | 0.505 | 180 | 70 | 250 | 6.37 | 0.301 |
| Embodiment 12 | 0.158 | 0.340 | 58 | 58 | 116 | 2.15 | 0.182 |
| Embodiment 13 (Single layer) | 0.347 | / | 250 | / | 250 | / | / |
| Embodiment 14 (Single layer) | 0.520 | / | 250 | / | 250 | / | / |
| Embodiment 15 (Single layer) | 0.154 | / | 250 | | 250 | / | / |
| Embodiment 16 (Single layer) | 0.357 | / | 116 | / | 116 | / | / |
| Embodiment 17 (Single layer) | 0.163 | / | 250 | / | 250 | / | / |
| Embodiment 18 (Single layer) | 0.245 | / | 250 | / | 250 | / | / |
| Embodiment 19 (Single layer) | 0.163+0.245 | | 250 | / | 250 | / | / |
| Embodiment 20 | 0.245 | 0.163 | 125 | 125 | 250 | 0.68 | -0.09 |
| Embodiment 21 (Single layer) | 0.786 | / | 250 | / | 250 | / | / |
| Comparative example 1 (Single layer) | 0.853 | / | 250 | / | 250 | / | / |
| Comparative example 2 (Single layer) | 0.047 | / | 250 | / | 250 | / | / |
| Comparative example 3 | 0.816 | / | 116 | / | 116 | / | / |

Test examples

(1) The electrode plates prepared in the embodiments and the comparative examples were assembled into symmetrical batteries. For example, when the liquid phase impedance of the positive electrode plate prepared in Embodiment 1 was tested, the two positive electrode plates prepared in Embodiment 1 were assembled into symmetrical batteries to test the liquid phase impedance. When the liquid phase impedance of the negative electrode plate prepared in Embodiment 12 was tested, the two negative electrode plates prepared in Embodiment 12 were assembled into symmetrical batteries to test the liquid phase impedance. When the liquid phase impedance of the positive electrode plate prepared in Embodiment 1 was tested, the two positive electrode plates prepared in Embodiment 1 were assembled into symmetrical batteries to test the liquid phase impedance. A dimension of the electrode plate was 62 cm×72 cm, and was tested through electrochemical impedance spectroscopy. A test was performed within a frequency range of 100 kHz to 0.01 Hz, and test results were fitted and calculated to obtain the liquid phase diffusion impedance of the electrode.

(2) The positive electrode plates prepared in embodiments 1 to 11, 13 to 15, and 17 to 21, the negative electrode plate prepared in Embodiment 12, and electrolyte were combined to sequentially obtain batteries A1 to A11, A13 to A15, and A17 to A21. The positive electrode plates prepared in Embodiments 1 and 2, the negative electrode plate prepared in Embodiment 12, and electrolyte were combined to obtain batteries A22 and A23. The negative electrode plates prepared in Embodiment 12 and Embodiment 16, the positive electrode plate prepared in Embodiment 1, and electrolyte were combined to obtain batteries A1 and A16. The negative electrode plate prepared in Comparative examples 3 and 4, the positive electrode plate prepared in Embodiment 1, and electrolyte were combined to obtain batteries A24 and A25. The positive electrode plate prepared in Embodiment 1, the negative electrode plate prepared in Comparative example 3, and electrolyte were combined to obtain a battery A26. The capacity retention rates of 2C discharge relative to the 0.2C discharge of the foregoing prepared batteries were tested.

(3) Unrolled electrode plates with the width of 5 cm in the embodiments and the comparative examples passed through a roller. The roller applied a given pressure of 5 t to measure the compacted density after the electrode plates are rolled.

The foregoing test results are as shown in Table 2.

Table 2

| | Battery number | Compacted density of corresponding electrode plate under pressure of 5t (g/cm$^3$) | Lithium ion liquid phase diffusion impedance, $\Omega$ | 2C/0.2C discharge rate |
|---|---|---|---|---|
| Test example 1 | A1 | 2.65 | 0.65 | 0.920 |
| Test example 2 | A2 | 2.62 | 0.60 | 0.925 |
| Test example 3 | A3 | 2.58 | 0.54 | 0.930 |
| Test example 4 | A4 | 2.65 | 0.71 | 0.90 |
| Test example 5 | A5 | 2.62 | 0.55 | 0.931 |
| Test example 6 | A6 | 2.65 | 0.65 | 0.918 |
| Test example 7 | A7 | 2.67 | 0.71 | 0.905 |
| Test example 8 | A8 | 2.57 | 0.49 | 0.951 |
| Test example 9 | A9 | 2.55 | 0.43 | 0.955 |
| Test example 10 | A10 | 2.50 | 0.75 | 0.881 |
| Test example 11 | A11 | 2.52 | 0.72 | 0.893 |
| Test example12 | A1 | 2.65 | 0.65 | 0.920 |
| Test example13 | A13 | 2.52 | 0.71 | 0.910 |
| Test example 14 | A14 | 2.48 | 0.55 | 0.925 |
| Test example 15 | A15 | 2.70 | 0.9 | 0.850 |
| Test example 16 | A16 | 1.58 | 0.35 | 0.935 |
| Test example 17 | A17 | 2.68 | 0.80 | 0.891 |
| Test example 18 | A18 | 2.58 | 0.70 | 0.911 |
| Test example 19 | A19 | 2.58 | 0.82 | 0.890 |
| Test example 20 | A20 | 2.63 | 0.92 | 0.872 |
| Test example 21 | A21 | 2.40 | 0.50 | 0.928 |
| Test example 22 | A22 | 2.10 | 0.52 | 0.880 |
| Test example 23 | A23 | 2.75 | 1.20 | 0.785 |
| Test example 24 | A24 | 1.32 | 0.58 | 0.863 |
| Test example 25 | A25 | 1.75 | 0.69 | 0.802 |
| Test example 26 | A26 | / | / | 0.652 |

Analyzing data in Table 2 and comparing test examples 13 to 15, it can be learned that, in a case of single-layer coating, the material with high sphericity has weak compaction capacity. However, under the same electrode plate compaction, the liquid phase diffusion impedance of the electrode plate is lower, and the kinetic performance is better. The electrode manufactured by a material within a sphericity range limited by the present disclosure can give consideration to both energy density (compacted density) and kinetic performance (low tortuosity and liquid phase diffusion impedance).

Test examples 1 to 11 show results of designs with an upper layer and a lower layer with different sphericity and different surface density in a case of double-layer coating. Comparing test example 1 and text example 17 (an electrode made by an upper-layer material in text example 1), text example 18 (an electrode made by a lower-layer material in text example 1), text example 19 (mixing two types of materials in text example 1), and text example 20 (exchanging the upper-layer material and the lower-layer material in text example 1), it can be learned that, through a double-layer coating design, an upper layer uses a material with high sphericity, and a lower layer uses a material with low sphericity, so that consideration can be given to both the compaction performance and the kinetic performance of the electrode.

It may further be learned from Table 2 that the compacted density of the secondary battery electrode plate prepared by the method according to the present disclosure can reach a level similar to that of a battery electrode with a single-layer low-sphericity active material layer.

Preferred embodiments of the present disclosure are described in detail above. However, the present disclosure is not limited to the specific details in the foregoing embodiments. Multiple simple deformations may be made to the technical solution of the present disclosure within a scope of the technical concept of the present disclosure, and these simple deformations fall within the scope of protection of the present disclosure.

Additionally, it is to be noted that, Various specific technical features described in the foregoing specific embodiments may be combined in any proper manner without conflict. To avoid unnecessary repetition, various possible combination manners are not separately described in the present disclosure.

In addition, various different embodiments of the present disclosure may alternatively be arbitrarily combined, and these combinations are still to be regarded as content disclosed in the present disclosure as long as not departing from the idea of the present disclosure.

**Claims**

1. A secondary battery electrode plate, comprising:

   a current collector; and
   a first active material layer, located on a surface of the current collector, the first active material layer containing first active substance particles, the first active substance particles having an equivalent sphericity $X_1$ as represented by the following Formula (1):

   $$X_1 = 3/(S_1 R_1 \rho_1) \ \ \text{Formula (1)},$$

   wherein $0.05 \leq X_1 \leq 0.8$, $R_1$ is a median radius of the first active substance particles in a unit of $\mu$m; $S_1$ is a specific surface area of the first active substance particles in a unit of m$^2$/g; and $\rho_1$ is true density of the first active substance particles in a unit of g/cm$^3$.

2. The secondary battery electrode plate according to claim 1, wherein when the electrode plate is a positive electrode plate, $0.10 \leq X_1 \leq 0.8$; or when the electrode plate is a negative electrode plate, $0.05 \leq X_1 \leq 0.8$.

3. The secondary battery electrode plate according to claim 1 or 2, further comprising a second active material layer; the second active material layer being located on a surface, deviating from the surface of the current collector, of the first active material layer; the second active material layer containing second active substance particles; the second active substance particles having an equivalent sphericity $X_2$ as represented by the following Formula (2):

   $$X_2 = 3/(S_2 R_2 \rho_2) \ \ \text{Formula (2)},$$

   wherein $R_2$ is a median radius of the second active substance particles in the unit of $\mu$m; $S_2$ is a specific surface area of the second active substance particles in the unit of m$^2$/g; $\rho_2$ is true density of the second active substance particles in the unit of g/cm$^3$; and the sphericity $X_2$ of the second active substance particles is greater than the equivalent sphericity $X_1$ of the first active substance particles.

4. The secondary battery electrode plate according to claim 3, wherein $0.05 \leq X_1 \leq 0.4$; and $0.2 \leq X_2 \leq 0.8$.

5. The secondary battery electrode plate according to claim 3, wherein $0.1 \leq X_1 \leq 0.3$; and $0.2 \leq X_2 \leq 0.5$.

6. The secondary battery electrode plate according to any one of claims 3 to 5, wherein $0.07 \leq X_2 - X_1 \leq 0.5$.

7. The secondary battery electrode plate according to any one of claims 3 to 5, wherein $0.2 \leq X_2 - X_1 \leq 0.4$.

8. The secondary battery electrode plate according to any one of claims 3 to 7, wherein when the electrode plate is a positive electrode plate, $R_1$ and $R_2$ of the first active substance particles are respectively and independently any values ranging from 0.05 to 5, and $S_1$ and $S_2$ are respectively and independently any values ranging from 0.5 to 20; and when the electrode plate is a negative electrode plate, $R_1$ and $R_2$ of the first active substance particles are respectively and independently any values ranging from 1 to 20, and $S_1$ and $S_2$ are respectively and independently any values ranging from 0.5 to 5.

9. The secondary battery electrode plate according to any one of claims 3 to 8, wherein surface density of the first active material layer is $Y_1 = \varepsilon \times L$, and surface density of the second active material layer is $Y_2 = (1 - \varepsilon) \times L$,

> wherein L is total surface density of the first active material layer and the second active material layer in the unit of $g/m^2$, one side of the current collector is coated with the first active material layer, or each of two sides of the current collector is coated with the first active material layer, and the surface, deviating from the current collector, of each first active material layer is coated with the second active material layer;
> if one side of the current collector is coated with the first active material layer, when the electrode plate is the positive electrode plate, $50 \leq L \leq 300$, or when the electrode plate is the negative electrode plate, $23 \leq L \leq 138$; or
> if each of the two sides of the current collector is coated with the first active material layer, when the electrode plate is the negative electrode plate, $100 \leq L \leq 600$, or when the electrode plate is the negative electrode plate, $46 \leq L \leq 276$; and $\varepsilon$ is an adjustment parameter, and $0.2 \leq \varepsilon \leq 0.8$.

10. The secondary battery electrode plate according to claim 9, wherein $0.1 \leq (X_2/Y_2)/(X_1/Y_1) \leq 6$.

11. The secondary battery electrode plate according to claim 9, wherein $0.25 \leq (X_2/Y_2)/(X_1/Y_1) \leq 4.5$.

12. The secondary battery electrode plate according to any one of claims 3 to 11, wherein when the electrode plate is the positive electrode plate, compacted density is 2.0 to 2.7 $g/cm^3$; or when the electrode plate is the negative electrode plate, compacted density is 1.0 to 2.0 $g/cm^3$.

13. A method for preparing secondary battery electrode plate, comprising:

> S1, coating a current collector with first slurry to obtain an electrode plate with the current collector coated with a first slurry layer; and
> S2, rolling the electrode plate,
> wherein the first slurry contains first active substance particles, the first active substance particles have an equivalent sphericity $X_1$ as represented by the following Formula (1):

$$X_1 = 3/(S_1 R_1 \rho_1) \ \text{Formula (1),}$$

> wherein $0.05 \leq X_1 \leq 0.8$, $R_1$ is a median radius of the first active substance particles in a unit of $\mu m$; $S_1$ is a specific surface area of the first active substance particles in a unit of $m^2/g$; and $\rho_1$ is true density of the first active substance particles in a unit of $g/cm^3$.

14. The method according to claim 13, wherein when the electrode plate is a positive electrode plate, $0.10 \leq X_1 \leq 0.8$; or when the electrode plate is a negative electrode plate, $0.05 \leq X_1 \leq 0.8$.

15. The method according to claim 13 or 14, wherein step S1 comprises: coating the current collector with the first slurry and second slurry to obtain an electrode plate sequentially coated with the first slurry layer and the second slurry layer in a direction far away from the current collector,

> wherein the second slurry contains second active substance particles, and the second active substance particles have an equivalent sphericity $X_2$ as represented by the following Formula (2):

$$X_2 = 3/(S_2 R_2 \rho_2) \ \text{Formula (2),}$$

> wherein $R_2$ is a median radius of the second active substance particles in the unit of $\mu m$; $S_2$ is a specific surface area of the second active substance particles in the unit of $m^2/g$; $\rho_2$ is true density of the second active substance particles in the unit of $g/cm^3$; and the sphericity $X_2$ of the second active substance particles is greater than the equivalent sphericity $X_1$ of the first active substance particles.

16. A secondary battery, comprising the secondary battery electrode plate according to any one of claims 1 to 12.

## INTERNATIONAL SEARCH REPORT

| International application No. |
|---|
| **PCT/CN2023/103481** |

| A. | CLASSIFICATION OF SUBJECT MATTER |
|---|---|

H01M4/13(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 电极, 极片, 正极, 负极, 阴极, 阳极, 粒径, 粒度, 半径, 比表面积, 真密度, 真实密度, 真比重, 真实比重, 压实密度, 能量密度, 内阻, 阻抗, 迂曲度, electrode, positive, negative, cathode, anode, diameter, size, D50, BET

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114883521 A (BYD CO., LTD.) 09 August 2022 (2022-08-09) claims 1-16, and description, paragraphs [0004]-[0096] | 1-16 |
| X | US 2010330429 A1 (NGK INSULATORS, LTD.) 30 December 2010 (2010-12-30) description, paragraphs [0011]-[0133] | 1, 2, 13, 14, 16 |
| A | US 2010330429 A1 (NGK INSULATORS, LTD.) 30 December 2010 (2010-12-30) description, paragraphs [0011]-[0133] | 3-12, 15 |
| X | JP 2018006270 A (NIPPON STEEL & SUMIKIN CHEMICAL CO., LTD.) 11 January 2018 (2018-01-11) description, paragraphs [0014]-[0088] | 1, 2, 13, 14, 16 |
| A | JP 2018006270 A (NIPPON STEEL & SUMIKIN CHEMICAL CO., LTD.) 11 January 2018 (2018-01-11) description, paragraphs [0014]-[0088] | 3-12, 15 |
| A | CN 111490253 A (NINGDE CONTEMPORARY AMPEREX TECHNOLOGY CO., LTD.) 04 August 2020 (2020-08-04) entire document | 1-16 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2023** | **31 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/103481** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 111613770 A (CITIC GUOAN MENGGULI POWER SOURCE TECHNOLOGY CO., LTD.) 01 September 2020 (2020-09-01) entire document | 1-16 |

Form PCT/ISA/210 (second sheet) (July 2022)

## INTERNATIONAL SEARCH REPORT
### Information on patent family members

International application No.

**PCT/CN2023/103481**

| Patent document cited in search report | | | Publication date (day/month/year) | Patent family member(s) | | | Publication date (day/month/year) |
|---|---|---|---|---|---|---|---|
| CN | 114883521 | A | 09 August 2022 | CN | 114883521 | B | 18 October 2022 |
| US | 2010330429 | A1 | 30 December 2010 | | None | | |
| JP | 2018006270 | A | 11 January 2018 | | None | | |
| CN | 111490253 | A | 04 August 2020 | WO | 2020155993 | A1 | 06 August 2020 |
| CN | 111613770 | A | 01 September 2020 | CN | 111613770 | B | 11 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210752174